Europäisches Patentamt

European Patent Office

Office européen des brevets

(19)

(11) **EP 0 689 190 B1**

(12) **EUROPÄISCHE PATENTSCHRIFT**

(45) Veröffentlichungstag und Bekanntmachung des Hinweises auf die Patenterteilung:
**02.08.2000 Patentblatt 2000/31**

(51) Int Cl.⁷: **G10L 21/02**, H04B 3/21

(21) Anmeldenummer: **95108587.7**

(22) Anmeldetag: **06.06.1995**

(54) **Verfahren zur Verringerung von Störungen eines Sprachsignals**

Method for reducing noise in a speech signal

Procédé pour reduire le bruit dans un signal de parole

(84) Benannte Vertragsstaaten:
**AT BE CH DE ES FR GB IT LI NL**

(30) Priorität: **15.06.1994 DE 4420894**

(43) Veröffentlichungstag der Anmeldung:
**27.12.1995 Patentblatt 1995/52**

(73) Patentinhaber: **DaimlerChrysler AG**
**70567 Stuttgart (DE)**

(72) Erfinder: **Linhard, Klaus, Dr.-Ing.**
**D-89601 Schelklingen (DE)**

(74) Vertreter: **Fröhling, Werner Otto, Dr.**
**DaimlerChrysler AG,**
**Intellectual Property Management,**
**Sedanstr. 10/Gebäude 17**
**89077 Ulm (DE)**

(56) Entgegenhaltungen:
**US-A- 4 658 426        US-A- 5 278 900**

- **SIGNAL PROCESSING EUROPEAN JOURNAL DEVOTED TO THE METHODS AND APPLICATIONS OF SIGNAL PROCESSING, Bd. 27, Nr. 3, 1.Juni 1992, AMSTERDAM, NL, Seiten 301-315, XP000363587 BORRALLO ET AL.: "On the implementation of a partitioned block frequency domain adaptive filter (PBFDAF) for long acoustic echo cancellation"**

- **IEEE TRANSACTIONS ON CIRCUITS AND SYSTEMS II: ANALOG AND DIGITAL SIGNAL PROCESSING, Bd. 41, Nr. 2, 1.Februar 1994, NEW YORK, NY, US, Seiten 164-168, XP000443037 DEISHER ET AL.: "Practical considerations in the implementation of a frequency-domain adaptive noise canceller"**

- **IEICE TRANSACTIONS, Bd. E74, Nr. 8, 1.August 1991, TOKYO, JP, Seiten 2276-2282, XP000268462 ASHARIF ET AL.: "Frequency bin adaptive filtering (FBAF) algorithm and its application to acoustic echo cancelling"**

- **IEEE INTERNATIONAL CONFERENCE ON ACOUSTICS, SPEECH AND SIGNAL PROCESSING 1992, Bd. 4, 23. - 26.März 1992, SAN FRANCISCO, CA, US, Seiten 9-12, XP000608873 AMRANE ET AL.: "Low-delay frequency domain LMS algorithm"**

- **IEEE TRANSACTIONS ON ACOUSTICS, SPEECH AND SIGNAL PROCESSING, Bd. 38, Nr. 2, 1.Februar 1990, Seiten 373-376, XP000113180 SOO ET AL.: "Multidelay block frequency domain adaptive filter"**

- **IEEE TRANSACTIONS ON ACOUSTICS, SPEECH AND SIGNAL PROCESSING, Bd. 27, Nr. 2, April 1979, NEW YORK, NY, US, Seiten 113-120, XP000560467 BOLL: "Suppression of acoustic noise in speech using spectral subtraction"**

- **IEEE SIGNAL PROCESSING MAGAZINE, Bd. 9, Nr. 1, 1.Januar 1992, NEW YORK, NY, US, Seiten 14-37, XP000436314 SHYNK: "Frequency-domain and multirate adaptive filtering"**

**Beschreibung**

Die Erfindung betrifft ein Verfahren zur Verringerung von Störungen eines Sprachsignals nach dem Oberbegriff des Patentanspruchs 1.

Eine wesentliche Maßnahme zur Verringerung von Störungen eines Sprachsignals ist die Kompensation von Echos. Neben Echokompensationsverfahren im Zeitbereich sind auch Echokompensationsverfahren im Frequenzbereich bekannt.

Für die Echokompensation im Frequenzbereich wird üblicherweise eine Blockverarbeitung durchgeführt, bei welcher Signalsegmente aus dem Zeitbereich in den Frequenzbereich transformiert werden, z. B. Ferrara, E.R;" Fast Implementation of LMS Adaptive Filters"; IEEE Trans. Acoust. Speech, Signal Processing, Vol. ASSP-28, No.4 Aug. 1980, p 474-475.

Mit N wird die Länge der mit dem Filter modellierten Impulsantwort bezeichnet. Die Eingangssegmente des Filters haben die Gesamtlänge 2N', wobei üblicherweise N' Werte überlappt werden (halbe Überlappung). Die Transformationslänge ist ebenfalls 2N', so daß für diesen Fall 2N'=2N gilt.

Neuere Frequenzbereichsverfahren verwenden Teilfilter, bei denen sich die Transformationslänge 2N' als ein ganzzahliger Bruchteil der zu modellierenden Impulsantwort ergibt, z.B.: Soo, J.S.; Pang, K.K.; Multidelay Block Frequency Domain Adaptive Filter, IEEE Trans. on ASSP, Vol. 38, No. 2, 1990, pp373-376. Bei Verwendung von M Teilfiltern gilt für die Transformationslänge 2N'= 2N/M.

Ein Verfahren zur Echokompensation im Frequenzbereich wird in US-A-5278900 offenbart, wobei ein Sprachsignal in einem Sprachkompensationsfilter mittels Fast-Fourier-Transformation verarbeitet wird.

Eine weitere gebräuchliche Maßnahme zur Verringerung von Störungen eines Sprachsignals ist die Geräuschreduktion, für welche als Standardverfahren die im Frequenzbereich durchzuführende spektrale Subtraktion eingeführt ist, z.B. Boll, S.; "Suppression of Acoustic Noise in Speech Using Spectral Subtraction", IEEE Trans. on ASSP, Vol ASSP-27, No.2, April 79, pp. 113-120.

Bei dieser wird ebenfalls eine Blockverarbeitung mit einer Transformation vom Zeit- in den Frequenzbereich durchgeführt. Üblicherweise werden halb überlappte gefensterte Signal-Segmente verwendet. Als Fensterfunktion wird meist ein Hanning-Fenster gewählt. Die Segmentlänge des Zeitsignals richtet sich hier nach den instationären Signaleigenschaften und kann einen größeren Signal-Zeitabschnitt als bei der Echokompensation umfassen, insbesondere bei der Echokompensation mit Teilfiltern.

Die Verfahren zur Kompensation akustischer Echos und zur Reduktion von Umgebungsgeräuschen können insbesondere zur Anwendung in Freisprecheinrichtungen in Kraftfahrzeugen auch gemeinsam eingesetzt werden.

Aufgabe der vorliegenden Erfindung ist es, ein vorteilhaftes Verfahren zur Verringerung von Störungen eines Sprachsignals anzugeben.

Die Erfindung ist im Patentanspruch 1 beschrieben. Die Unteransprüche enthalten vorteilhafte Ausgestaltungen und Weiterbildungen der Erfindung.

Die Erfindung nutzt die für die Echokompensation in den Frequenzbereich transformierten Segmente trotz der mit anderen Signalverarbeitungen an sich ungleichen Signal-Zeitabschnitte mehrfach, indem transformierte Segmente zu kürzeren Signalabschnitten im Frequenzbereich zu neuen Gesamt-Segmenten zusammengefaßt werden, welche längeren Signal-Zeitabschnitten entsprechen. Auch eine für den Signal-Zeitabschnitt vorgesehene Fensterung kann durch Anwendung einer Faltungsoperation auf das zusammengefaßte Gesamt-Segment im Frequenzbereich durchgeführt werden.

Das erfindungsgemäße Verfahren ist hinsichtlich des Signalverarbeitungsaufwands deutlich effektiver als eine unabhängige Verarbeitung nach verschiedenen Verfahren, z.B. durch deren Reihenschaltung. Besonders vorteilhaft ist die integrierte Signalverarbeitung mit Echokompensation und Geräuschreduktion im Frequenzbereich, indem das Ergebnis der Geräuschreduktion im Echokompensator zur Adaptionsüberwachung und Steuerung mitverwendet wird.

Die Erfindung ist nachfolgend anhand von Ausführungsbeispielen unter Bezugnahme auf die Abbildungen noch eingehend veranschaulicht.

FIG. 1a     zeigt ein Blockschaltbild eines bekannten Verfahrens zur Echokompensation im Frequenzbereich.

FIG. 1b     zeigt ein Blockschaltbild eines bekannten Verfahrens zur Geräuschreduktion im Frequenzbereich

FIG. 2a     zeigt zeitlich aufeinanderfolgende Transformationssegmente $e_1$ für die Echokompensation im Frequenzbereich mit halber Segmentüberlappung.

FIG. 2b     zeigt die zur Geräuschreduktion im Frequenzbereich benötigten Transformationssegmente $e_1^*$ gleicher Transformationslänge 2N' im Zeitbereich.

FIG. 3     zeigt für eine Überlappung von ¾ einer Transformationssegmentlänge bei der Echokompensation entsprechend einer effektiven Länge des Signalausschnitts von $N'_{eff} = N'/2$ eine Segmentzusammenfassung im Frequenzbereich.

FIG. 4 a, b     zeigen die Bildung eines transformierten Gesamtsegments aus zeitlich aufeinanderfolgenden transformierten Teilsegmenten für $N'_{eff} = N'$ und $N'_{eff} = N'/2$.

FIG. 5 zeigt eine Kombination eines Frequenzbereichs-Echokompensationsverfahrens mit einer Frequenzbereichs-Geräuschreduktion.

FIG. la zeigt ein Blockschaltbild für die Funktion eines an sich bekannten Verfahrens zur Echokompensation im Frequenzbereich, z. B. wie bei Ferrara beschrieben. Aus einem Referenz-Zeitsignal x werden halb überlappende Signalsegmente der Länge 2N' gebildet (1) und nach Transformation (2) in den Frequenzbereich, z. B. mittels einer Fast-Fourier-Transformation FFT, in einem Echokompensationfilter FE (3) zur Ableitung von Kompensationssegmenten herangezogen. Die Kompensationssegmente als Filterausgangssignale werden in den Zeitbereich zurücktransformiert (4). Von den rücktransformierten Segmenten der Länge 2N' werden nur die letzten N' Werte (5) zur Kompensation verwandt. Von dem Zeitsignal y wird der im Frequenzbereich gefilterte Signalabschnitt als Kompensationsanteil subtrahiert (8). Das Zeitsignal eo ist das Ausgangssignal des Kompensators und gleichzeitig das Fehlersignal für die weitere Adaption der Echokompensation. Aus dem Zeitsignal eo wird ein Signalsegment der Länge N' ausgeschnitten und mit N' führenden Nullen zu einem Transformationssegment $e_1$ der Transformationslänge 2N' verlängert (6). Die Segmentlängen beziehen sich dabei jeweils auf die Anzahl von Abtastwerten als diskreten Stützstellen und der Index l ist der zeitliche Index aufeinanderfolgender Segmentbildungen (Blockindex). Das Transformationssegment $e_1$ wird mittels eines an sich bekannten Transformationsverfahrens, vorzugsweise einer Fast Fourier Transform FFT, in den Frequenzbereich transformiert (7) und liegt dort dann als transformiertes Segment $E_1$ der Länge 2N' vor, das zur Adaption des Kompensationsfilters FE (3) im Frequenzbereich dient.

Eine Verallgemeinerung ergibt sich durch eine stärkere Überlappung der Eingangssegmente des Zeitsignals x, wobei eine höhere Konvergenzgeschwindigkeit auf Kosten des Rechenaufwands erzielt wird. Es ergibt sich z.B. bei einer Überlappung der Eingangssegmente um drei Viertel der Segmentlänge 2N' ein nach jedem Zeitabschnitt I neu berechneter Signalabschnitt der effektiven Länge $N'_{eff}=N'/2$ anstelle von $N'_{eff}=N'$ bei halber Überlappung. Für das Transformationssegment $e_1$ wird dementsprechend jeweils ein Signalabschnitt der Länge $N'_{eff}$ aus dem Ausgangssignal eo des Echokompensators entnommen und um 3/2 N' führenden Nullen auf die Transformationslänge 2N' ergänzt.

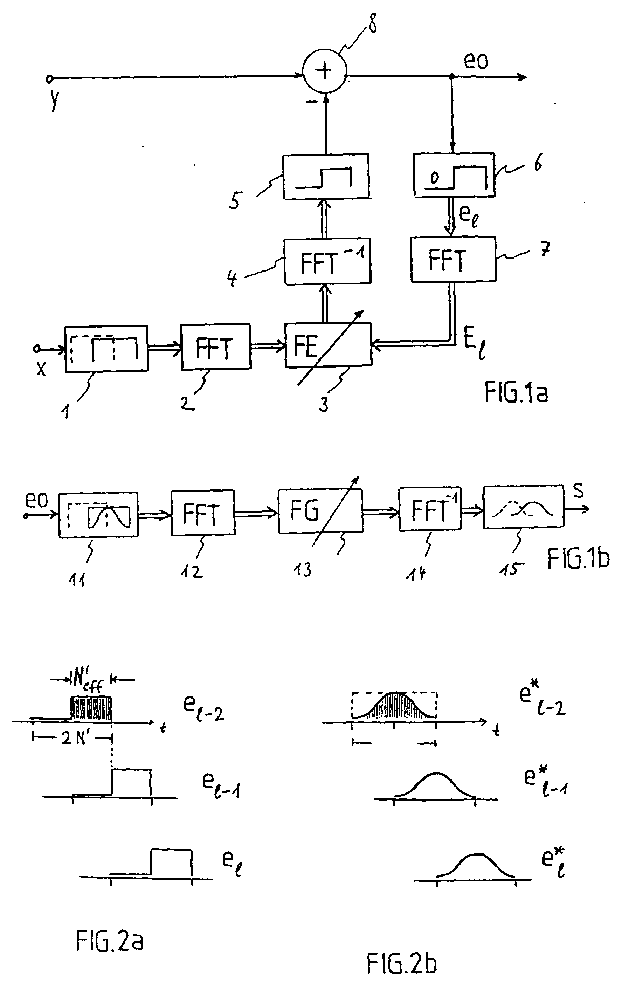

FIG. 1b zeigt ein Blockschaltbild für die Funktion eines an sich bekannten Verfahrens zur Geräuschreduktion im Frequenzbereich, z. B. mittels der spektralen Subtraktion wie bei Boll a.a.O. beschrieben. Aus dem Zeitsignal eo, das insbesondere auch das Ausgangssignal eines bekannten Echokompensators sein kann, werden Segmente der Länge 2N' gebildet. Diese Segmente sind halb überlappt und mit einer Fensterfunktion, beispielsweise einem Hanning-Fenster gewichtet (11). Nach Transformation (12) in den Frequenzbereich werden die Segmente in einem Geräuschreduktionsfilter FG einer spektralen Subtraktion unterzogen (13) und im Zeitbereich (14) wieder überlappt und zu einem geräuschreduzierten Ausgangssignal s zusammengefaßt (15).

In FIG. 2a sind zeitlich aufeinanderfolgende Transformationssegmente $e_1$ für die Echokompensation im Frequenzbereich mit halber Segmentüberlappung abgebildet. Dem sind in FIG. 2b die zur Geräuschreduktion im Frequenzbereich benötigten Transformationssegmente $e*_1$ gleicher Transformationslänge 2N' im Zeitbereich gegenübergestellt, die vorzugsweise mit einer Fensterfunktion, z.B. einem Hanning-Fenster, gewichtet sind. Aufeinanderfolgende Segmente sind halb überlappt.

In FIG: 3 ist für eine Überlappung von 3/4 einer Transformationssegmentlänge bei der Echokompensation entsprechend einer effektiven Länge des Signalausschnitts von $N'_{eff} = N'/2$ eine Segmentzusammenfassung im Frequenzbereich veranschaulicht.

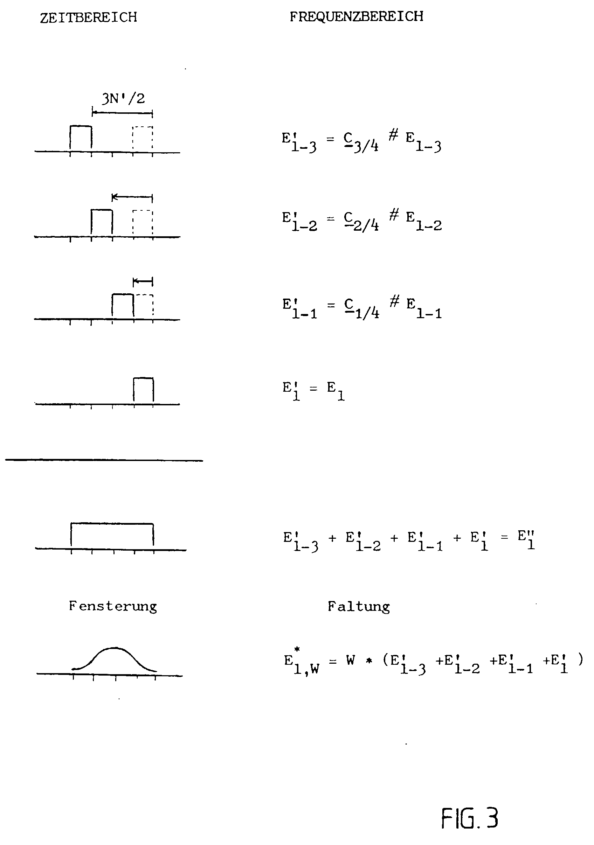

Das jüngste transformierte Segment $E_1$ entsprechend dem Transformationssegment $e_1$ im Zeitbereich wird als neues transformiertes Teilsegment $e'_1$ unverändert übernommen. Auf das um einen Transformationsschritt T entsprechend N'/2 Abtastwerten zeitlich frühere, transformierte Segment $E_{l-1}$ wird durch elementweise Multiplikation mit einem Phasenvektor $\underline{C}_{1,4}$ eine Zeitverschiebung innerhalb des Transformationssegments $e_{l-1}$ um N'/2 Abtastwerte nachgebildet, was zu einem neuen transformierten Teilsegment $E'_{l-1}$ führt. In entsprechender Weise wird durch Nachbildung einer Verschiebung um N' Abtastwerte aus $E_{l-2}$ ein neues transformiertes Teilsegment $E'_{l-2}$ und einer Verschiebung um 3N'/2 Abtastwerte aus $E_{l-3}$ ein neues transformiertes Teilsegment $E'_{l-3}$ gebildet. Die nachgebildete Verschiebung ist in FIG. 3 für die Segmente im Zeitbereich durch Pfeile angedeutet. Die neuen transformierten Teilsegmente können dann additiv zusammengefaßt werden zu einem transformierten Gesamtsegment $E''_l$, welches einer Transformation eines Zeitsignalabschnitts aus 2N' aufeinanderfolgenden Abtastwerten entspricht.

Um ein transformiertes Gesamtsegment $E*_{l,W}$ entsprechend einem gefensterten Transformationssegment $e*_l$ zu erhalten, kann die Fensterfunktion im Zeitbereich durch eine Faltungsoperation im Frequenzbereich ersetzt werden.

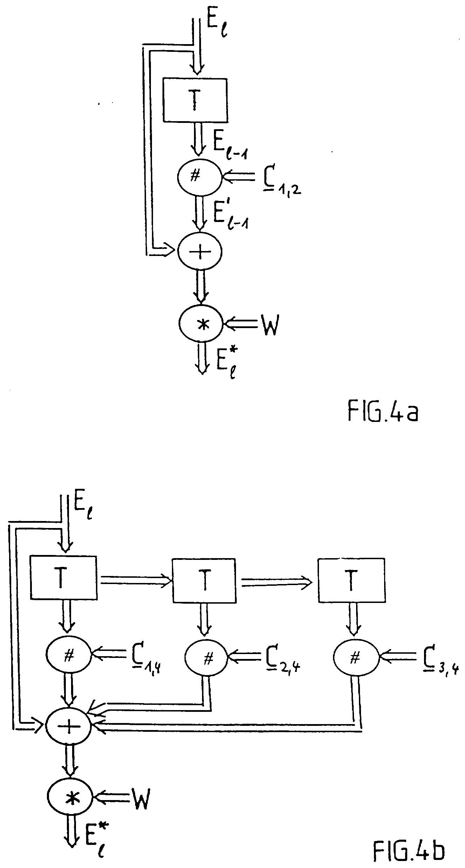

Da für die Bildung eines transformierten Gesamtsegments mehrere zeitlich aufeinanderfolgende transformierte Teilsegmente herangezogen werden, werden diese nach oder vorzugsweise wie in FIG. 4a und FIG 4b für N'$_{eff}$=N' bzw. N'$_{eff}$=N'/2 skizziert vor der Nachbildung der Zeitverschiebung um einen oder mehrere Transformationsschritte T verzögert bzw. zwischengespeichert.

Für die Nachbildung einer Zeitverschiebung um R Abtastwerte innerhalb eines Transformationssegments der Transformationslänge 2N' durch elementweise Multiplikation mit einem Phasenkorrekturvektor C gilt allgemein

$$\underline{C} = [\, C^0, C^1, C^2, C^3,..., C^{2N'-1}\,]$$

mit dem Phasenfaktor

$$C = e^{-j\,2\pi\,R/2N'}$$

Prinzipiell ist damit mit dem entsprechenden Wert C jede Verschiebung nachzubilden, so daß aus den Teilsegmenten wieder ein Gesamtsegment gebildet werden kann. Vorzugsweise ist aber die Transformationslänge ein um eine Zweierpotenz Mehrfaches der effektiven Segmentlänge.

Für eine Echokompensation mit einer Transformationslänge 2N' gleich dem Vierfachen der effektiven Segmentlänge N'$_{eff}$ = N'/2 entsprechend einer Dreiviertelüberlappung bei der Echokompensation ergeben sich komplexe Phasenfaktoren
$C_{1,4} = (0,-j)$, $C_{2,4} = (-1,0)$ und $C_{3,4} = (0,j)$
und daraus abgeleitet die Phasenkorrekturvektoren $\underline{C}_{1,4}$, $\underline{C}_{2,4}$, $\underline{C}_{3,4}$. Für halbe Überlappung tritt nur ein Phasenfaktor $C_{1,2} = (-1,0)$ und ein Phasenkorrekturvektor $\underline{C}_{1,2}$ auf.

Die Faltungsoperation, welche die Multiplikation mit einer Fensterfunktion im Zeitbereich ersetzt, umfaßt für das Hanningfenster nur die Faltung mit drei Impulsen und ist somit mit geringem Aufwand durchführbar.

Für halbe Überlappung der Echokompensation ergibt sich beispielsweise das transformierte Gesamtsegment E*$_l$ zu

$$E^*_l = W * (E_l + \underline{C}_{1,2} \,\#\, E_{l-1})$$

für Dreiviertelüberlappung zu

$$E^*_l = W * (E_l + \underline{C}_{1,4} \,\#\, E_{l-1} + \underline{C}_{2,4} \,\#\, E_{l-2} + \underline{C}_{3,4} \,\#\, E_{l-3})$$

wobei $*$ für die Faltungsoperation und # für elementweise Multiplikation steht.

Prinzipiell ist die Erfindung auf alle Block-Frequenzbereichsverfahren anwendbar wenn die effektive Segmentlänge N'$_{eff}$ der Echokompensation um ein ganzzahliges kleiner als die Segmentlänge 2N' der Geräuschreduktion ist. 2N' ist dabei immer die Länge der Frequenztransformation. Vorzugsweise bieten sich die Kompensationsverfahren mit Teilfiltern an, da hier die Transformationslänge auf die Teilfilter heruntergeteilt werden kann.

Die Erfindung ist nicht ausschließlich für die Integration der Geräuschreduktion anwendbar. Sie kann auch dann vorteilhaft eingesetzt werden, wenn ein anderes System, beispielsweise ein Spracherkenner angeschaltet oder integriert wird.

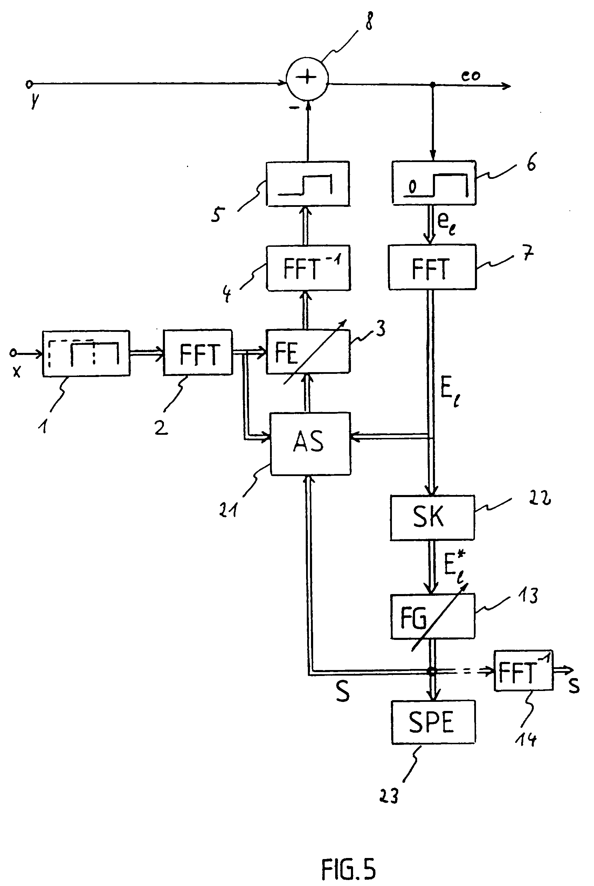

In FIG. 5 ist die besonders vorteilhafte Kombination eines Frequenzbereichs-Echokompensationsverfahrens mit einer Frequenzbereichs-Geräuschreduktion skizziert. Die transformierten Segmente E$_l$ werden als Teilsegmente einer Segmentkorrektur SK (22) zur Bildung transformierter Gesamtsegmente E*$_l$ wie beschrieben zusammengefaßt und dienen als Eingangssignale eines an sich bekannten Frequenzbereichs-Geräuschreduktionsfilters GR (13), vorzugsweise mit einer spektralen Subtraktion. Die echokompensierten und geräuschreduzierten Ausgangssignale S der Geräuschreduktion können beispielsweise einem Speacherkenner SPE zugeleitet und/oder in den Zeitbereich rücktransformiert (14) und als störbefreites Sprachsignal s ausgegeben werden. Darüberhinaus werden die Ausgangssignale S der Geräuschreduktion GR vorteilhafterweise zur verbesserten Adaption des Echokompensationsfilters herangezogen werden (21), indem beispielsweise die Adaption bei Sprachaktivität verlangsamt oder unterbunden wird. Die Sprachaktivität läßt sich am geräuschreduzierten Signal S besser detektieren. Für die diesbezügliche Verarbeitung ist in FIG. 5 eine Adaptionssteuerung AS skizziert.

**Patentansprüche**

1.  Verfahren zur Verringerung von Störungen eines Sprachsignals mit einer Echokompensation, bei welcher ein Signalsegment als Teil eines Transformationssegments aus dem Zeitbereich in den Frequenzbereich transformiert wird, <u>dadurch gekennzeichnet,</u> daß zeitlich nacheinander transformierte Segmente im Frequenzbereich zu einem neuen Frequenzbereichs-Gesamtsegment entsprechend mehreren aufeinanderfolgenden Signalsegmenten im Zeitbereich zusammengefaßt werden und daß das neue Frequenzbereichs-Gesamtsegment einer zu der Echokompensation zusätzlichen Signalverarbeitung zugeführt wird.

2.  Verfahren nach Anspruch 1, dadurch gekennzeichnet, daß für die Zusammenfassung der transformierten Segmente im Frequenzbereich eine Zeitverschiebung der Signalsegmente innerhalb der Transformationssegmente nachgebildet wird.

3.  Verfahren nach Anspruch 1 oder Anspruch 2, dadurch gekennzeichnet, daß die Länge des Transformationssegments ein ganzzahliges Vielfaches der Länge des Signalsegments ist.

**4.** Verfahren nach einem der Ansprüche 1 bis 3, dadurch gekennzeichnet, daß die zusätzliche Verarbeitung eine Geräuschreduktion umfaßt.

**5.** Verfahren nach Anspruch 4, dadurch gekennzeichnet, daß im Frequenzbereich das Ergebnis der Geräuschreduktion zur Einstellung der Echokompensation mitberücksichtigt wird.

**6.** Verfahren nach einem der Ansprüche 1 bis 5, dadurch gekennzeichnet, daß die zusätzliche Verarbeitung eine Spracherkennung umfaßt.

**7.** Verfahren nach einem der Ansprüche 1 bis 6, dadurch gekennzeichnet, daß das neue Frequenzbereichs-Segment einer Faltung entsprechend einer Fensterung im Zeitbereich unterzogen wird.

## Claims

**1.** Method of reducing disturbances of a speech signal with echo compensation, in which a signal segment as part of a transformation segment is transformed from the time domain into the frequency domain, characterised in that segments, which have been transformed successively in time, in the frequency domain are combined into several successive signal segments, which correspond with a new frequency domain aggregate segment, in the time domain and that the new frequency domain aggregate segment is fed to a signal processing additional to the echo comparison.

**2.** Method according to claim 1, characterised in that for the combining of the transformed segments in the frequency domain a time displacement of the signal segments within the transformation segments is simulated.

**3.** Method according to claim 1 or claim 2, characterised in that the length of the transformation segment is an integral multiple of the length of the signal segment.

**4.** Method according to claim 1 to 3, characterised in that the additional processing comprises a noise reduction.

**5.** Method according to claim 4, characterised in that in the frequency domain the result of the noise reduction is taken into consideration for setting of the echo compensation.

**6.** Method according to claim 1 to 5, characterised in that the additional processing comprises a speech recognition.

**7.** Method according to claim 1 to 6, characterised in that the new frequency domain the segment is subjected to a convolution corresponding to a windowing in the time domain.

## Revendications

**1.** Procédé pour réduire des parasites d'un signal vocal avec une compensation d'échos lors de laquelle un segment du signal est transformé en tant que partie d'un segment de transformation, en étant amené du domaine temporel au domaine des fréquences, caractérisé en ce que des segments transformés successivement dans le temps pour être amenés dans la gamme des fréquences sont réunis pour former un nouveau segment global dans la gamme des fréquences, conformément à plusieurs segments successifs du segment dans la gamme temporelle et que le nouveau segment global dans la gamme des fréquences est soumis à un traitement de signaux venant en supplément de la compensation d'échos.

**2.** Procédé selon la revendication 1, caractérisé en ce que pour la réunion des segments transformés dans la gamme des fréquences, un décalage temporel des segments du signal est simulé à l'intérieur des segments de transformation.

**3.** Procédé selon la revendication 1 ou la revendication 2, caractérisé en ce que la longueur du segment de transformation est un multiple entier de la longueur du segment de signal.

**4.** Procédé selon l'une des revendications 1 à 3, caractérisé en ce que le traitement supplémentaire inclut une réduction du bruit.

**5.** Procédé selon la revendication 4, caractérisé en ce que dans la gamme des fréquences, le résultat de la réduction du bruit est pris conjointement en compte pour le réglage de la compensation d'échos.

**6.** Procédé selon l'une des revendications 1 à 5, caractérisé en ce que le traitement supplémentaire comprend une reconnaissance de la parole.

**7.** Procédé selon l'une des revendications 1 à 6, caractérisé en ce que le nouveau segment de la gamme des fréquences est soumis à une convolution conformément à un fenêtrage dans la gamme temporelle.

FIG.1a

FIG.1b

FIG.2a

FIG.2b

ZEITBEREICH          FREQUENZBEREICH

$$3N'/2$$

$$E'_{1-3} = \underline{C}_{3/4} \# E_{1-3}$$

$$E'_{1-2} = \underline{C}_{2/4} \# E_{1-2}$$

$$E'_{1-1} = \underline{C}_{1/4} \# E_{1-1}$$

$$E'_1 = E_1$$

$$E'_{1-3} + E'_{1-2} + E'_{1-1} + E'_1 = E''_1$$

Fensterung          Faltung

$$E^{*}_{1,W} = W * (E'_{1-3} + E'_{1-2} + E'_{1-1} + E'_1)$$

FIG. 3

FIG.4a

FIG.4b

FIG.5